# EUROPEAN PATENT SPECIFICATION

(11) **EP 2 141 067 B1**
(45) Date of publication and mention of the grant of the patent: **16.10.2013**
(21) Application number: 09008379.1
(22) Date of filing: 26.06.2009
(51) Int. Cl.: B62J 35/00, B62J 37/00, F02M 35/16, F02M 35/10

(54) **Motorcycle**
Motorrad
Motocyclette

(30) Priority: 30.06.2008 JP 2008171211
(43) Date of publication of application: 06.01.2010
(73) Proprietor: Yamaha Hatsudoki Kabushiki Kaisha, Shizuoka-ken Shizuoka 438-8501 (JP)
(72) Inventor: Koike, Munetaka, Iwata-shi Shizuoka-ken 438-8501 (JP)
(74) Representative: Zimmermann, Tankred Klaus

(56) References cited:
- JP-A- 7 172 368
- JP-A- 8 142 959
- JP-A- 9 058 551
- JP-A- 2007 030 688

## Description

### BACKGROUND OF THE INVENTION

### 1. Field of the Invention

The present invention relates to a motorcycle and more specifically, to a motorcycle including an air cleaner under a fuel tank.

### 2. Description of the Background Art

Some types of motorcycles have an air cleaner under a fuel tank. The air cleaner gathers dirt and dust as the motorcycle travels, and the air cleaner must be maintained on a regular basis. A motorcycle for motocross races in particular gathers much dust into the air cleaner even for one occasion of running because the motorcycle runs on bad roads, and therefore frequent maintenance is needed.

For maintenance of the air cleaner, the fuel tank positioned above the air cleaner must be removed. The fuel tank is connected with a fuel hose used to supply fuel to a fuel injector. It is desirable that the air cleaner can be maintained without removing the fuel hose in order to reduce the complication of the maintenance. In fuel injection type motorcycles, fuel in a fuel hose is under pressure, the removal of the fuel hose from the fuel tank should be avoided as much as possible.

Some conventional motorcycles allow their fuel tanks to be rotated in the vertical direction so that the air cleaner can be maintained while the fuel hose is still connected. JP 2007-321648 A disclosed a motorcycle having a fuel tank that can be rotated upward so that air cleaner can be readily maintained. The rotation center of the fuel tank is positioned near the main frame of the body.

JP2007030688A discloses a rear cushion arranging structure of a motorcycle capable of avoiding reduction of capacity of a fuel tank while sufficiently securing a rear cushion stroke even in directly supporting a lower part of the rear cushion on a rear fork. The motorcycle is furnished with a body frame having a main frame and a seat rail extending to the rear of the body from this main frame and the rear cushion arranged between this body frame and the rear fork axially supporting a rear wheel. The fuel tank is arranged in such a way as to straddle over the main frame and the seat rail. A fuel pump is arranged on a rear part of a bottom part of this fuel tank, and an upper end of the rear cushion is positioned to the front of the fuel pump by projecting it upward from the seat rail. The fuel tank is rotatable in a vertical direction about a pivot at a rear part thereof.

JP8142959A discloses an evaporative system of a motorcycle, wherein evaporated gas in a fuel tank is taken outside, and fed to a canister provided on the motorcycle body to be adsorbed by the canister. The rear end part of the fuel tank is turnably supported by the motorcycle body and the fuel tank is openable/closable in the vertical direction. A roll-over valve to close the valve in the prescribed inclined condition is interposed in the middle of the passage to guide the evaporated gas taken outside of the fuel tank, and this roll-over valve is fixed to the fuel tank.

JP9058551A discloses a fuel tank support device for a motorcycle formed in such a manner that a rider's hand easily reaches a group rod to maintain the opening state of a fuel tank and it does not take much time for preparation before maintenance of the parts of a suction system below a fuel tank for the maintenance of a suction part below a fuel tank. A prop rod to support a fuel tank when a fuel tank is opened is arranged between the inner surface of the space part of the fuel tank and the upper surface of an air cleaner. The prop rod has one end rotatably supported at either the inner surface of the space part of a fuel tank or the upper surface of an air cleaner and the other end engaged with the inner surface of the space part of the fuel tank, to which the prop rod is supported, or the upper surface of the air cleaner through single operation.

JP7172368A discloses a fuel tank rear part support mechanism. A bolt of the rear part support mechanism of a fuel tank is unscrewed and a bracket is moved rearward between a press plate and a press plate. The rearward movement of the bracket causes dislocation of a hook member at the front part of the fuel tank from a roller on the frame side. In this case, backward movement of the bracket is regulated by a rise piece and the mounting hole of a bottom hole is matched with the mounting holes and of the press plate and the support plate. The bolt is inserted in the mounting holes and the fuel tank is maintained in backward movement position. The fuel tank is then rocked upward around a pin serving as a fulcrum and held in a release state by a tilt-up cylinder and a portion above an engine is released, closing operation is reversed.

### SUMMARY OF THE INVENTION

It is an object of the present invention to provide a motorcycle that facilitates maintenance of an air cleaner and its surrounding region.

This object is achieved by a motorcycle of claim 1.

A motorcycle according to a preferred embodiment of the present invention includes a body frame, a rear arm, a rear cushion, an engine, a fuel tank, and an air cleaner. The rear arm is attached to the body frame to support a rear wheel. The rear cushion is provided between the body frame and the rear arm. The engine is fixed to the body frame in front of the rear cushion and provided with an intake path in a front side thereof. The fuel tank is supported rotatably in a vertical direction at a supporter arranged at the body frame at a center of the rear cushion along an axis of the rear cushion or rearward a center of the rear cushion along an axis of the rear cushion and above the engine. The air cleaner is connected to the engine through the intake path and at least partly covered by the fuel tank.

According to the preferred embodiment of the present invention, since the air cleaner is provided away from the rotation center of the fuel tank, a large space is secured above the air cleaner without much increasing the rotation angle of the fuel tank, which facilitates maintenance.

Furthermore, according to the preferred embodiment of the present invention, since a large space is secured above the engine without much increasing the rotation angle of the fuel tank, the removal of a cylinder head cover, and maintenance of valves, plugs and the like can be carried out without removing the fuel tank.

It is an advantage of the present invention that maintenance of the air cleaner and its surrounding region is facilitated without complicating the peripheral structure of a fuel tank.

According to an embodiment of the present invention, the supporter is arranged at the body frame above the engine at a position corresponding to the center of the rear cushion or at a position rearward the center of the rear cushion, or the supporter is arranged at the body frame above the engine at a position corresponding to the rear end of the rear cushion or at a position rearward of the rear end of the rear cushion.

Other features, elements, steps, characteristics and advantages of the present invention will become more apparent from the following detailed description of the preferred embodiments of the present invention with reference to the attached drawings.

### BRIEF DESCRIPTION OF THE DRAWINGS

Fig. 1 is a left side view of a motorcycle according to an embodiment of the present invention.
Fig. 2 is a left side view of the peripheral structure of a fuel tank.
Fig. 3 is a front sectional view of the attachment structure of the fuel tank and a side cover.
Fig. 4 is a left side view of the peripheral structure of the fuel tank, an air cleaner, and an engine with the side cover removed.
Fig. 5 is a side sectional view of the air cleaner.
Fig. 6 is a perspective view of the air cleaner viewed obliquely from the upper left.
Fig. 7 is a perspective view of the air cleaner with a lid removed.
Fig. 8 is a left side view showing the rotation state of the fuel tank and the peripheral structure of the fuel tank.
Fig. 9 is a perspective view of a tubular member at a fuel supply opening used to guide a suction pump into the fuel tank.

### DETAILED DESCRIPTION OF THE PREFERRED EMBODIMENTS

### General Structure of Motorcycle

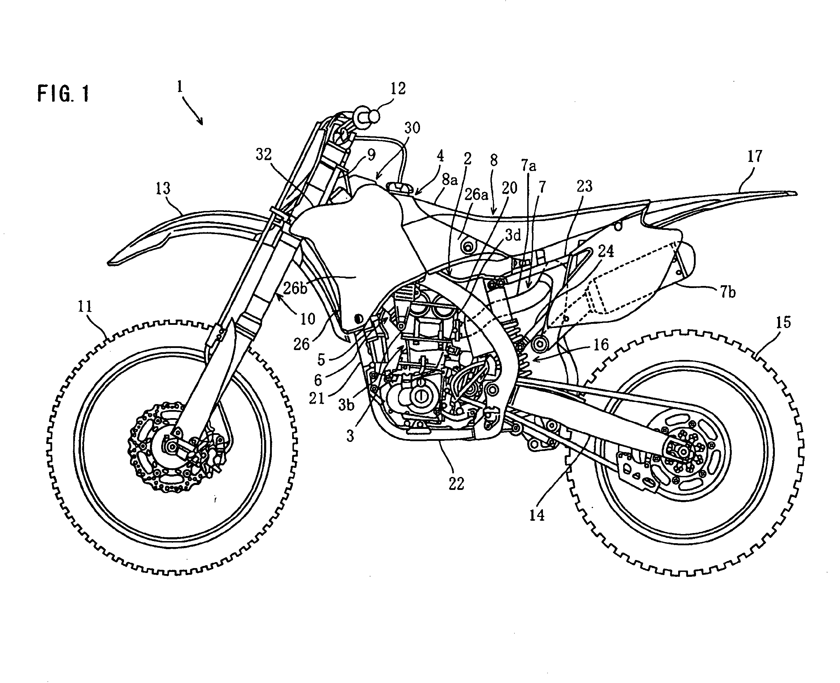

Now, an embodiment of the present invention will be described with reference to the accompanying drawings. Fig. 1 is a left side view of a motorcycle 1 according to an embodiment of the invention. The motorcycle 1 is an off-road type motorcycle, a so-called "motocrosser" for off-road races such as motocross races. In the following description, directions such as front-back and crosswise directions refer to these directions viewed from a rider on the seat unless clearly specified otherwise.

With reference to Fig. 1, the general structure of the motorcycle 1 will be described. The motorcycle 1 includes a cradle type body frame 2, a water-cooled, 4-stroke cycle and single cylinder engine 3 provided at the body frame 2, and an intake device 6 and an exhaust device 7 connected to the engine 3. The motorcycle 1 according to the embodiment takes in air from the front of the engine 3, and discharges exhaust from the back of the engine 3.

The body frame 2 is provided with a fuel tank 4 above the engine 3. The body frame 2 is provided with a saddle type seat 8 behind the fuel tank 4. The front part 8a of the seat 8 is arranged to cover almost the entire upper surface of the fuel tank 4. A radiator 5 is provided in front of the engine 3.

A head pipe 9 is provided in front of the fuel tank 4 at the front part of the body frame 2, and a front fork 10 is supported by the head pipe 9 so that the front fork 10 can be operated in the right and left directions. A front wheel 11 is rotatably supported at the lower end of the front fork 10, and an operation handle 12 is attached to the upper end. A front fender 13 is provided above the front wheel 11.

The body frame 2 has right and left main frames 20 that extend from the head pipe 9 to the back. The body frame 2 further includes a single upper down frame 21 that extends approximately linearly downward from the head pipe 9, right and left lower down frames 22 that are branched from the lower end of the upper down frame 21 and extend approximately horizontally to the back. The lower ends of the right and left main frames 20 are coupled with the rear ends of the right and left lower down frames 22.

A rear wheel 15 is rotatably supported at the rear end of the rear arm 14 supported at the body frame 2 so that the rear arm 14 can swing up and down, and a rear cushion 16 is provided between the rear arm 14 and the body frame 2. The rear arm 14 and the rear cushion 16 and the peripheral members serve as a rear-wheel suspension. A rear fender 17 that covers the upper space of the rear wheel 15 is attached at the body frame 2. The rear fender 17 extends to the back so that it forms a continuous surface with the seat 8.

### Peripheral Structure of Fuel Tank

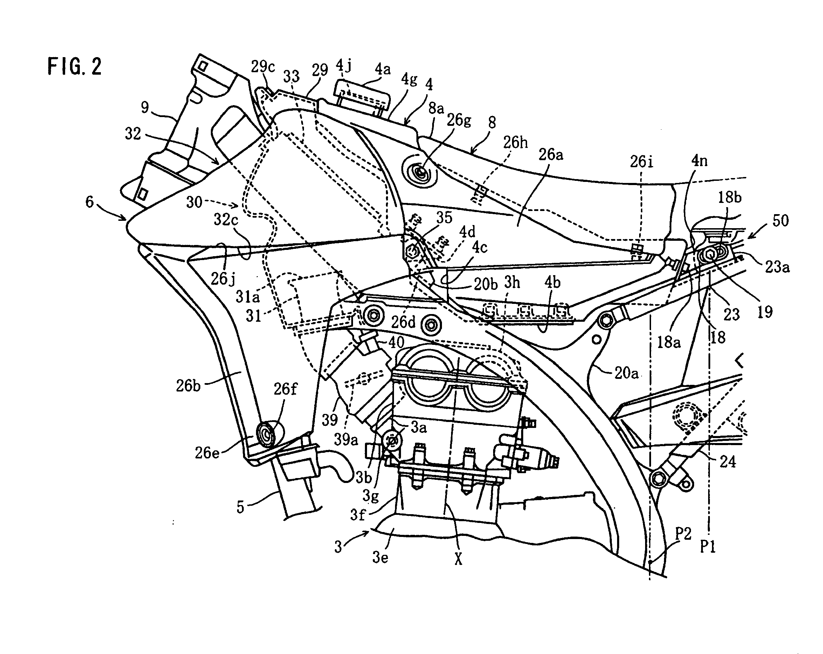

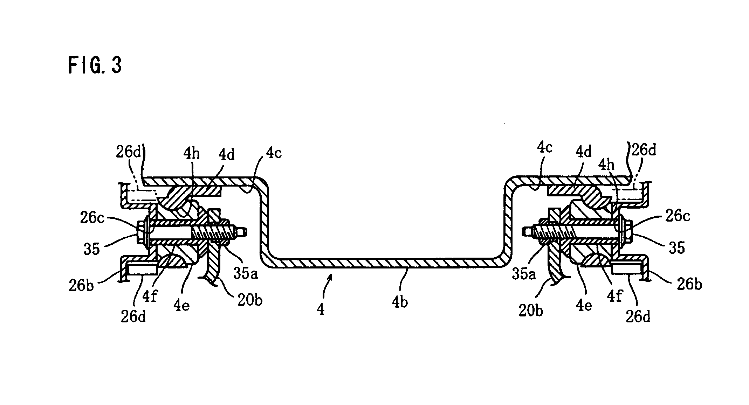

Now, with reference to Figs. 2 and 3, the peripheral structure of the fuel tank 4 will be described in detail. Fig. 2 is a left side view of the peripheral structure of the fuel tank 4, an air cleaner 30, a side cover 26 and the engine 3.

The body frame 2 includes right and left seat frames 23 and right and left seat stays 24 under the fuel tank 4. The right and left seat frames 23 are members that extend obliquely upwardly to the back from the rear boss 20a of the right and left main frames 20. The right and' left seat frames 23 support the rear side of the fuel tank 4 and the central part of the seat 8. The right and left seat stays 24 couple the rear ends of the right and left seat frames 23 and the parts of the right and left main frames 20 slightly lower than the rear boss 20a in order to reinforce the right and left seat frames 23.

Right and left side covers 26 are mounted at the outer side of the right and left main frames 20. The right and left side covers 26 each include a tank cover 26a that covers a side of the fuel tank 4 and a cleaner cover 26b that covers a side of the air cleaner 30 and the upper part of the radiator 5, in other words, the cover is divided into two parts in the longitudinal direction.

Fig. 3 is a front sectional view showing how the fuel tank 4 and the side cover 26 are attached. As shown in Fig. 3, attachment recesses 4c are formed at the right and left sides of the bottom wall 4b of the fuel tank 4, and tank brackets 4d are fastened by bolts or fixed by welding or the like to the right and left attachment recesses 4c. A ring-shaped elastic member 4e is fitted into the attachment hole 4h of the tank bracket 4d. A cylindrical collar 4f is fitted into the elastic member 4e.

The main frame 20 is provided with a support bracket 20b used to support the front part of the fuel tank 4. The collar 4f of the tank bracket 4d contacts the support bracket 20b. While the collar 4f is fitted into the attachment hole 26c of the cleaner cover 26b, the support bracket 20b, the tank bracket 4d, and the cleaner cover 26b are fastened and fixed by a bolt 35 and a nut 35a.

Referring back to Fig. 2, a tab 26d is formed to project forward at the part of the tank cover 26a opposed to the bolt 35. The tab 26d is held between the rear edge of the cleaner cover 26b and the tank bracket 4d.

In this way, the fuel tank 4, the tank cover 26a and the cleaner cover 26b are fixed to the support bracket 20b of the body frame 2 as they are placed on one another. Therefore, the side cover 26 may be divided into front and rear parts, so that the assembling structure of the fuel tank 4 and the side cover 26 can be simplified and the man-hours necessary for assembling can be reduced.

The lower ends 26e of the right and left cleaner covers 26b are fastened and fixed by bolts 26f at the outer walls of the right and left radiators 5 arranged apart from each other in the widthwise direction.

The tank cover 26a is fixed to the fuel tank 4 by fastening a front bolt 26g, a central bolt 26h and a rear bolt 26i into nuts embedded in the wall part of the fuel tank 4.

### Peripheral Structure of Engine

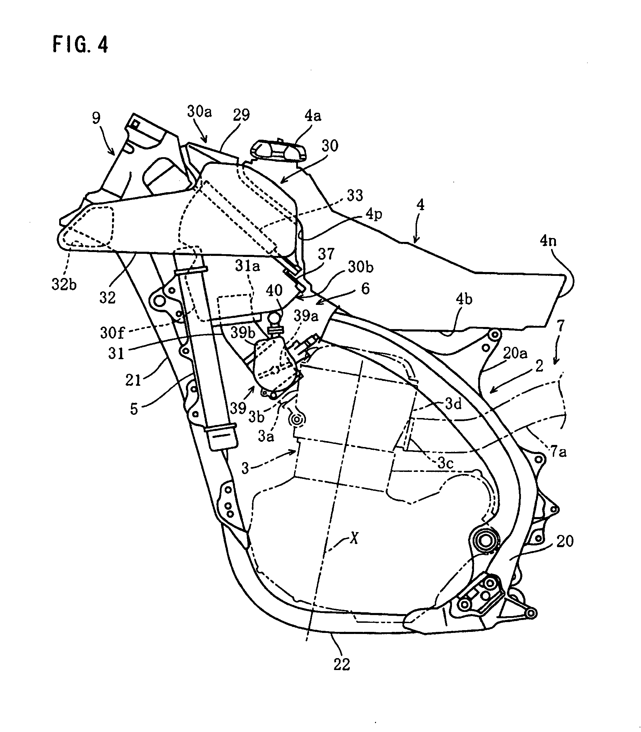

Now, with reference to Figs. 2 and 4, the peripheral structure of the engine 3 will be described in detail. Fig. 4 is a left side view of the peripheral structure of the fuel tank 4, the air cleaner 30 and the engine 3 with the side cover removed.

As shown in Fig. 4, in the space surrounded by the right and left main frames 20, the upper down frame 21 and the right and left lower down frames 22, the engine 3 is placed as the cylinder axial line X is slightly inclined to the back side. The engine 3 is thus slightly inclined to the back side, so that the weight balance of the entire body is improved. As shown in Fig. 2, the engine 3 has a cylinder body 3f, a cylinder head 3g, and a head cover 3h coupled in a layered structure on a crank case 3e.

As described above, according to the embodiment, the engine 3 takes in air from the front and discharges exhaust from the back. The intake device 6 that supplies air to an intake port 3a opened at the front wall 3b of the engine 3 is provided above the front of the engine 3. The exhaust device 7 that discharges exhaust gas let out from an exhaust port 3c opened at the back wall 3d is provided behind the engine 3.

The exhaust device 7 has an exhaust pipe 7a connected to the exhaust port 3c of the engine 3 and a muffler 7b (see Fig. 1) connected to the downstream end of the exhaust pipe 7a.

The intake device 6 has the air cleaner 30 and right and left outside air introduction ducts 32. The right and left outside air introduction ducts 32 are connected to the air cleaner 30 to extend to the front of the motorcycle and introduce traveling air into the air cleaner 30. The intake device 6 has an intake pipe 31 connected to the bottom of the air cleaner 30. The intake device 6 has a throttle body 39 connected to the intake pipe 31 and including a throttle valve 39a. The throttle body 39 is connected to the intake port 3a.

A fuel injector 40 is provided at the rear wall of the throttle body 39. The fuel injector 40 is provided to supply fuel into the intake port 3a, more specifically toward the backside of the intake valve. A throttle opening degree sensor 39b that detects the opening degree of the throttle valve 39a is provided on the side of the throttle valve 39a.

The intake pipe 31 and the throttle body 39 are provided to extend in the vertical direction between the fuel tank 4 and the radiator 5 when viewed from the side of the motorcycle. The intake pipe 31 and the throttle body 39 are positioned between the right and left radiators 5 and hidden behind the upper down frame 21 when viewed from the front of the motorcycle.

### Structure of Air Cleaner

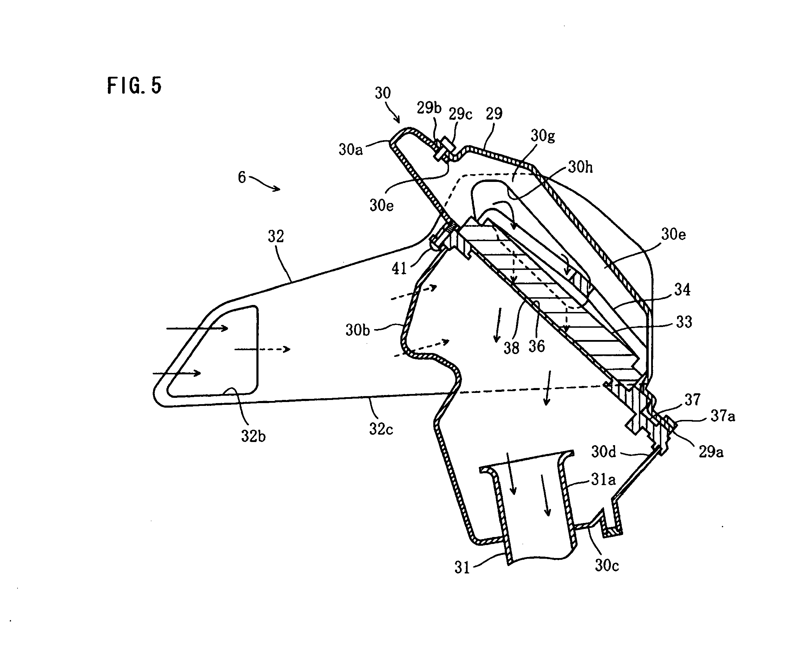

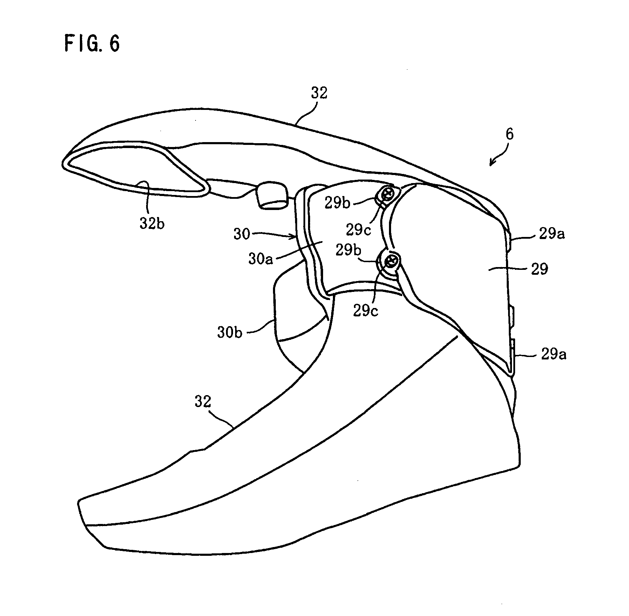

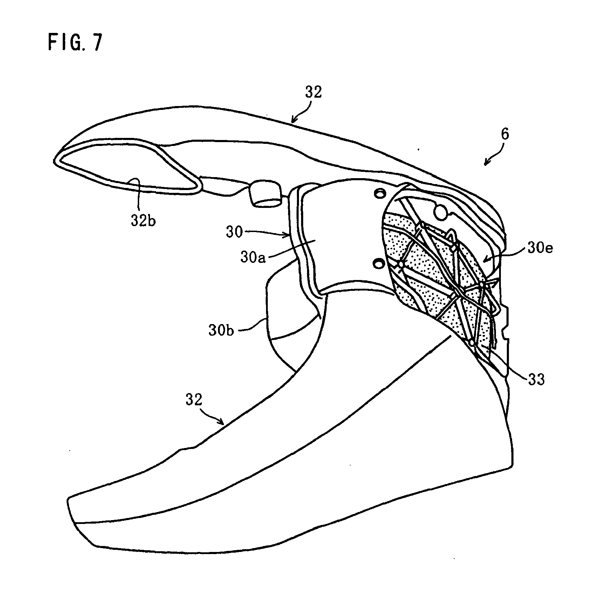

With reference to Figs. 4, 5, 6, and 7, the structure of the air cleaner 30 will be described in detail. Fig. 5 is a left side sectional view of the air cleaner 30. Fig. 6 is a perspective view of the air cleaner 30 viewed obliquely from the upper left. Fig. 7 is a perspective view of the air cleaner 30 with the lid removed and the element being exposed.

As shown in Fig. 4, the air cleaner 30 is provided above the front part of the engine 3 when viewed from the side of the motorcycle. The air cleaner 30 is provided in the space surrounded by the fuel tank 4, the radiators 5, the engine 3, the right and left main frames 20 and the head pipe 9. The rear part of the air cleaner 30 is covered with the front part 4g of the fuel tank 4.

With reference to Fig. 5, the air cleaner 30 has a case main body divided in the vertical direction into upper and lower cases 30a and 30b and an element 33 provided at the boundary between the upper case 30a and the lower case 30b.

The lower case 30b is a box-shaped member having an opening 30d at the obliquely upper portion thereof. The opening 30d of the lower case 30b is fixed to the bottom of a frame 37 formed along the opening 30d. The upper case 30a is mounted at the upper surface of the frame 37.

The element 33 is attached detachably on the frame 37. A sub element 36 is provided under the element 33 to cover the opening of the frame 37. The sub element 36 prevents foreign matter such as dust from coming into the lower case 30b during exchange of the element 33 or maintenance thereof. A metallic net 38 is mounted at the opening of the frame 37.

The lower case 30b is positioned between the right and left main frames 20 and extends downward from the lower edges of the main frames 20. The intake pipe 31 is connected to the bottom wall 30c of the lower case 30b. The upstream part 31a of the intake pipe 31 protrudes into the lower case 30b.

The upper case 30a has a maintenance opening 30e. The maintenance opening 30e can be covered with the lid 29. Fig. 7 is a view of the air cleaner 30 with the lid 29 removed. The tab 29a formed on the rear edge of the lid 29 is inserted into the hinge part 37a formed at the rear edge of the frame 37 and the lid 29 is allowed to rotate upward around the tab 29a. A projection 29b formed at the front edge of the lid 29 is fastened and fixed detachably by the bolts 29c at the front edge of the upper case 30a. The lid 29 can be rotated upward by removing the bolt 29c. When the element 33 is exchanged or maintained, it is only necessary to rotate the fuel tank 4 upward and then the lid 29 upward.

The upper case 30a is positioned between the fuel tank 4 and the head pipe 9 when viewed from the side of the motorcycle and extends in the widthwise direction of the motorcycle so that it covers the right and left main frames 20 from above. A major part of the upper case 30a is provided to come into a storage recess 4p formed at the front bottom wall of the fuel tank 4. When the fuel tank 4 is rotated upward, the lid 29 is exposed.

Elongate air inlets 30h are formed at the right and left side wall 30g of the upper case 30a. The right and left outside air introduction ducts 32 are connected to the right and left side wall 30g of the upper case 30a to communicate with the air inlets 30h and extend to the front of the motorcycle from the upper case 30a. Outside air introduction holes 32b are formed at the front ends of the outside air introduction ducts 32 so that the holes 32 are opened inwardly in the widthwise direction.

As shown in Fig. 2, the upper edges 26j of the cleaner covers 26b contact the lower edges 32c of the right and left outside air introduction ducts 32, so that the outside air introduction ducts 32 and the cleaner covers 26b form continuous surfaces. In this way, the right and left outside air introduction ducts 32 also serve as a body cover.

### Rotation Structure of Fuel Tank

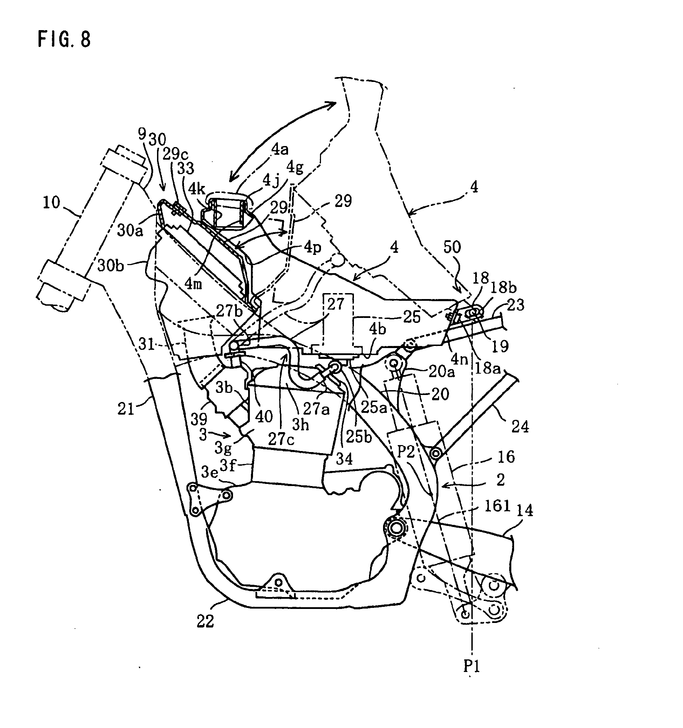

Now, with reference to Figs. 2 and 8, the rotation structure of the fuel tank 4 will be described. Fig. 8 is a left side view of the rotation state of the fuel tank 4 and the peripheral structure of the fuel tank 4. A supporter 50 that rotatably supports the fuel tank 4 is provided at the rear wall 4n of the fuel tank 4. The supporter 50 has a tank side support bracket 18, a support bracket 23a on the side of the body frame 2 and a coupling pin 19 that couples these brackets. The coupling pin 19 serves as the rotation axis of the tank 4.

The tank side support bracket 18 is fastened and fixed to the rear wall 4n by a bolt 18a. An elongate hole 18b elongated in the longitudinal direction is formed at the support bracket 18. The fuel tank 4 is supported rotatably in the vertical direction by the support brackets 23a formed at the right and left seat frames 23 through the coupling pin 19. The coupling pin 19 is inserted into the elongate hole 18b of the support bracket 18 and fixed to the support brackets 23a.

A fuel pump 25 is provided in the fuel tank 4. The bottom 25a of the fuel pump 25 protrudes downwardly from the opening formed at the bottom wall 4b of the fuel tank 4. The projecting part is connected with a discharge pipe 25b. The discharge pipe 25b extends outwardly in the widthwise direction (to the left) and is then bent forward obliquely downwardly. The bent part is connected with one end 27a of a fuel hose 27. The other end 27b of the fuel hose 27 is connected with the fuel injector 40 mounted at the throttle body 39. A thermal insulation cover 34 is provided between the part of the discharge pipe 25b that extends outwardly in the widthwise direction and the head cover 3h of the engine 3.

The fuel hose 27 has a curved slack 27c that allows the fuel tank 4 to rotate upward. The pump side part of the slack 27c is positioned between the main frame 20 and the head cover 3h of the engine 3. The other part of the slack 27c extends toward the fuel injector 40 through above the head cover 3h when viewed from the side of the motorcycle. When the fuel tank 4 is rotated downwardly and closed, the slack 27c is positioned so that the slack 27c partly overlaps the head cover 3h when viewed from the side of the motorcycle.

A resin member is used for the fuel tank 4 according to the embodiment uses, so that the rear wall 4n of the fuel tank 4 slightly moved backward when the fuel tank 4 is expanded because of gasoline swelling. The movement of the rear wall 4n caused by the swelling of the fuel tank 4 is absorbed as the elongate hole 18b of the support bracket 18 moves to the back relative to the coupling pin 19.

When the element 33 in the air cleaner 30 is maintained, the fuel tank 4 is rotated upward to expose the lid 29 of the air cleaner 30. More specifically, the bolt 35 fixing the front part of the bottom wall 4b of the fuel tank 4 is pulled out, and then the fuel tank 4 is moved to the front (or the back) by the amount of the elongate hole 18a and then rotated upward. Then, the bolt 29c at the front edge of the lid 29 is pulled out and the lid 29 is rotated upward around the rear edge of the lid 29. In this way, the element 33 is exposed as shown in Fig. 7.

According to tile-embodiment, the air cleaner 30 is provided in front of the engine 3, in other words, provided away from the coupling pin 19 around which the fuel tank 4 is rotated, so that a large space can be secured above the air cleaner 30 without much increasing the rotation angle of the fuel tank 4, which facilitates maintenance of the air cleaner 30.

As shown in Fig. 8, the longitudinal position of the supporter 50 around which the fuel tank 4 is rotated is approximately in the same position as the longitudinal position P1 of the rear end (lower end) of the rear cushion 16. More specifically, the rotation center of the fuel tank 4 is positioned more on the rear side than the conventional structure. In this way, the lid 29 of the air cleaner 30 may be readily removed and the element 33 may be easily maintained without greatly rotating the fuel tank 4 upward.

The position of the rotation center of the fuel tank 4 is higher than the position of the bracket 20a provided at the main frame 20. More specifically, the rotation center is provided on the seat frame 23 fixed at the bracket 20a and extending upwardly obliquely to the back, so that the position of the rotation center is in a higher position. Thus, the supporter 50 is arranged at the body frame at a position above the engine 3. In this way, the lid 29 of the air cleaner 30 can readily be removed, and the element 33 can readily be exchanged without increasing the angle to rotate the fuel tank 4 upward.

Note that according to the embodiment, the position of the rotation center of the fuel tank 4 is approximately in the same position as the position P1 at the rear end of the rear cushion 16. However, the rotation center may be positioned even more on the rear side than the rear end of the rear cushion 16. In this way, the air cleaner 30 can be readily maintained by rotating the fuel tank 4.

When it is difficult to position the rotation center of the fuel tank 4 near the rear end of the rear cushion 16, the air cleaner 30 can be readily maintained as long as the rotation center is approximately in the same position as the center P2 of the rear cushion 16 along the axis 161 of the rear cushion 16 or in a position behind the center P2.

In this way, the rotation center of the fuel tank 4 is positioned more on the rear or upper side than the conventional structure, and therefore the air cleaner 30 as well as the engine 3 can be readily maintained. As shown in Fig. 8, as the fuel tank 4 is rotated upward, a large space is secured above the engine 3 and therefore the head cover 3h can be removed and the valves, the plugs or the like can be readily maintained without removing the fuel hose 27.

Furthermore, since the fuel injector 40 provided on the throttle body 39 connected to the front wall 3b of the engine 3, is provided toward the front wall 3b, the fuel injector 40 can be viewed from above when the fuel tank 4 is rotated upward, and the periphery of the fuel injector 40 can be readily maintained.

When the fuel tank 4 is rotated upward, the slack 27c of the fuel hose 27 extends from the state indicated by the solid line in Fig. 8 to the state indicated by the double-dotted chain line, which allows the fuel tank 4 to be rotated, and the slack 27c must be longer as the rotation angle increases. According to the embodiment, the fuel tank 4 is moved forward along the elongate hole 18b as described above, and then rotated upward, so that the necessary length of the slack 27c can be reduced.

Alternatively, the fuel tank 4 may be moved backward along the elongate hole 18b, and the rotation center of the fuel tank 4 may be placed in a higher position, so that a large space for maintenance can be secured.

According to the embodiment, the slack 27c of the fuel hose 27 is positioned between the head cover 3h and the left main frame 20, and therefore a space for positioning the slack 27c of the fuel hose 27 can readily be secured.

For the slack 27c is positioned between the head cover 3h and the main frame 20, the discharge pipe 25b must be extended in the widthwise direction at the upper surface of the head cover 3h, and the temperature of the fuel at the part could be raised in some cases. However, according to the embodiment, the thermal insulation cover 34 is provided between the widthwise-extended part of the discharge pipe 25 and the cylinder head 3h, and therefore increase in the temperature of the fuel can be restrained.

For the cylinder block 3f and the cylinder head 3g of the engine 3, the cylinder axial line X is provided slightly inclined to the back, so that the front wall 3b of the cylinder head 3g is inclined obliquely to the back. Therefore, a space for positioning the fuel injector 40 can be easily secured, and the fuel injector 40 can be easily maintained.

The element 33 of the air cleaner 30 is provided above the intake pipe 31, so that intake air passed through the element 33 directly comes into the end opening of the intake pipe 31. Therefore, the intake air resistance is reduced, and the airflow can be smoothed, which contributes to improved filling efficiency and thus improved engine output.

As shown in Fig. 8, a fuel supply opening 4j is formed at the front part 4g of the fuel tank 4. A fuel cap 4a is detachably mounted at the fuel supply opening 4j.

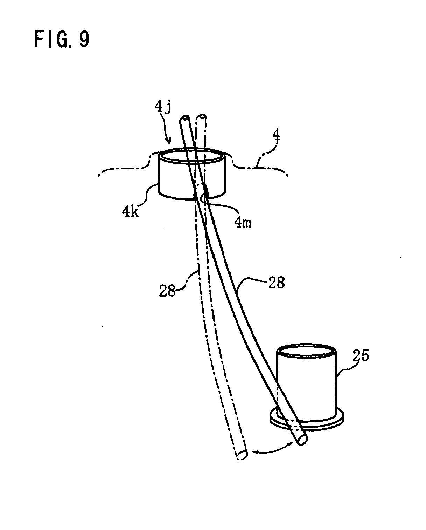

The fuel supply opening 4j is provided with a tubular body 4k that extends downwardly and projects into the tank. A notch 4m is formed at the lower edge of the tubular body 4k as shown in Fig. 9. When for example a suction hose 28 is inserted into the tank in order to suck in fuel in the fuel tank 4, the notch 4m can guide the suction hose 28 in such a direction that the hose does not contact the fuel pump 25. In this way, damages to the fuel pump 25, especially to its wires during suction operation can be prevented.

The fuel supply opening 4j is formed at the part of the fuel tank 4 that covers the air cleaner 30, i.e., at the part 4g positioned more on the front side than the seat 8, so that the fuel supply opening 4j and then the fuel cap 4a are exposed to above, the refueling can readily be carried out without having to lift or detach the seat.

The lid 29 is rotatably supported at the tab 29a provided at the rear edge of the opening 30e, and therefore the lid 29 rotates upward around the rear edge of the opening 30e, in other words, in the same direction as the rotation direction of the fuel tank 4, so that the element 33 can be maintained without much increasing the rotation angles of both. If the lid 29 is rotated around the front edge, the element would be hidden until they are both rotated by at least 90°.

The bolt 29c used to fix the cover is provided more on the front side than the part of the seat 8 that covers the fuel tank 4, so that the bolt 29c is exposed to above, the fixed state can be observed visually, and it can be checked whether or not the lid 29 is securely fixed.

According to the above-described embodiment, the engine 3 and the air cleaner 30 are connected through the intake pipe 31. However, the air cleaner 30 may be provided near the engine 3 and the case of the air cleaner 30 may be in close contact with the intake side of the engine 3.

While preferred embodiments of the present invention have been described above, it is to be understood that variations and modification will be apparent to those skilled in the art without departing from the scope of the present invention as defined in the appended claims. The scope of the present invention, therefore, is to be determined solely by the following claims.

## Claims

1. A motorcycle, comprising:
a body frame (2);
a rear arm (14) attached to the body frame (2) to support a rear wheel (15);
a rear cushion (16) provided between the body frame (2) and the rear arm (14);
an engine (3) fixed to the body frame (2) in front of the rear cushion (16) and provided with an intake path in a front side thereof;
a fuel tank (4) supported rotatably in a vertical direction at a supporter (50) arranged at the body frame (2) at or rearward a longitudinal position corresponding to a longitudinal position of a center (P2) of the rear cushion (16) along an axis of the rear cushion (16) and above the engine (3); and
an air cleaner (30) arranged in front of the engine (3) and connected to the engine (3) through the intake path and at least partly covered by the fuel tank (4),
wherein the engine (3) includes an intake opening (3a) provided at a front wall of the engine (3), and an exhaust opening (3c) provided at a rear wall of the engine (3),
the motorcycle further comprising:
an intake pipe (31) that communicates between the intake opening (3a) and a bottom of the air cleaner (30).

2. The motorcycle according to claim 1, wherein the supporter (50) is arranged at the body frame (2) above the engine (3) at a longitudinal position corresponding to a longitudinal position of a rear end (P1) of the rear cushion (16) or at a longitudinal position rearward of the longitudinal position of the rear end (P1) of the rear cushion (16).

3. The motorcycle according to any one of claims 1 to 2, wherein
the air cleaner (30) includes a case main body (30a, 30b),
the case main body (30a, 30b) includes:
an opening (30e) formed at a portion covered by the fuel tank (4), and
a lid (29) covering the opening (30e), and
the air cleaner (30) includes an element (33) stored in the case main body (30a, 30b) and exposed through the opening (30e) with the lid (29) removed.

4. The motorcycle according to claim 3, wherein
the case main body (30a, 30b) includes an attacher arranged at a rear edge of the opening (30e) to rotatably support the lid (29).

5. The motorcycle according to any one of claims 1 to 4, wherein
the motorcycle further comprises:
a fuel injector (40) attached to the intake pipe (31) visible from above with the fuel tank (4) rotated upward.

6. The motorcycle according to any one of claims 1 to 4, wherein
the engine (3) having a cylinder axis inclined backward.

7. The motorcycle according to any one of claims 1 to 6, further comprising:
a seat (8) having a front portion partially covering the fuel tank (4);
the fuel tank (4) including a fuel supply opening (43) more on a front side of the fuel tank (4) than the seat (8), the front side being uncovered by the seat (8).

8. The motorcycle according to any one of claims 1 to 7, further comprising:
a fuel pump (25) provided in the fuel tank (4);
a throttle body (39) attached to the intake pipe (31); and
a fuel hose (27) communicating between a discharge opening (25b) of the fuel pump (25) and the throttle body (39),
the fuel hose (27) including a slack (27c) provided between a head (3h) of the engine (3) and the body frame (2) and stored so as to partially overlap the head (3h) of the engine (3) when viewed from a side of the motorcycle while the fuel tank (4) is closed, the slack (27c) allowing the fuel tank (4) to rotate.

9. The motorcycle according to any one of claims 1 to 7, wherein
the supporter (50) includes an adjuster (18a, 18b) arranged to adjust a position of the fuel tank (4) in a longitudinal direction.

10. The motorcycle according to any one of claims 1 to 9, further comprising:
a side cover (26) covering the fuel tank (4) and the air cleaner (30), wherein the side cover includes;
a tank cover (26a) arranged to cover the fuel tank (4), and
a cleaner cover (26b) arranged to cover the air cleaner (30), and
the body frame (2) includes a fixer (20b) arranged to fix the fuel tank (4), the tank cover (26a) and the cleaner cover (26b) so as to partially overlap each other.

11. The motorcycle according to any one of claims 1 to 10, wherein the motorcycle is an off-road motorcycle.

## Patentansprüche

1. Ein Motorrad, das folgende Merkmale aufweist:
einen Körperrahmen (2);
einen hinteren Arm (14), der an dem Körperrahmen (2) angebracht ist, um ein Hinterrad (15) zu tragen;
einen hinteren Dämpfer (16), der zwischen dem Körperrahmen (2) und dem hinteren Arm (14) vorgesehen ist;
einen Motor (3), der an dem Körperrahmen (2) vor dem hinteren Dämpfer (16) befestigt ist und mit einem Einlassweg in einer Vorderseite desselben versehen ist;
einen Kraftstofftank (4), der drehbar in einer vertikalen Richtung an einem Träger (50) getragen wird, der an dem Körperrahmen (2) an oder hinter einer longitudinalen Position angeordnet ist, die einer longitudinalen Position einer Mitte (p2) des hinteren Dämpfers (16) entlang einer Achse des hinteren Dämpfers (16) und über dem Motor (3) entspricht; und
einen Luftreiniger (30), der vor dem Motor (3) angeordnet ist und durch den Einlassweg mit dem Motor (3) verbunden ist und zumindest teilweise durch den Kraftstofftank (4) bedeckt ist,
wobei der Motor (3) eine Einlassöffnung (3a) umfasst, die an einer Vorderwand des Motors (3) vorgesehen ist, und eine Auslassöffnung (3c), die an einer Hinterwand des Motors (3) vorgesehen ist,
wobei das Motorrad ferner folgendes Merkmal aufweist:
ein Einlassrohr (31), das zwischen der Einlassöffnung (3a) und einer Unterseite des Luftreinigers (30) kommuniziert.

2. Das Motorrad gemäß Anspruch 1, bei dem der Träger (50) an dem Körperrahmen (2) über dem Motor (3) an einer longitudinalen Position angeordnet ist, die einer longitudinalen Position eines hinteren Endes (p1) des hinteren Dämpfers (16) entspricht, oder an einer longitudinalen Position hinter der longitudinalen Position des hinteren Endes (p1) des hinteren Dämpfers (16).

3. Das Motorrad gemäß einem der Ansprüche 1 bis 2, bei dem
der Luftreiniger (30) einen Gehäusehauptkörper (30a, 30b) umfasst,
der Gehäusehauptkörper (30a, 30b) folgende Merkmale umfasst:
eine Öffnung (30e), die an einem Abschnitt gebildet ist, der durch den Kraftstofftank (4) bedeckt ist, und
einen Deckel (29), der die Öffnung (30e) bedeckt, und
der Luftreiniger (30) ein Element (33) umfasst, das in dem Gehäusehauptkörper (30a, 30b) gespeichert ist, und durch die Öffnung (30e) freigelegt ist, wenn der Deckel (29) entfernt ist.

4. Das Motorrad gemäß Anspruch 3, bei dem
der Gehäusehauptkörper (30a, 30b) eine Befestigungsvorrichtung umfasst, die an einem hinteren Rand der Öffnung (30e) angeordnet ist, um den Deckel (29) drehbar zu tragen.

5. Das Motorrad gemäß einem der Ansprüche 1 bis 4, bei dem das Motorrad ferner folgendes Merkmal aufweist:
einen Kraftstoffinjektor (40), der an dem Einlassrohr (31) angebracht ist, und von oben sichtbar ist, wenn der Kraftstofftank (4) nach oben gedreht ist.

6. Das Motorrad gemäß einem der Ansprüche 1 bis 4, bei dem der Motor (3) eine Zylinderachse aufweist, die nach hinten geneigt ist.

7. Das Motorrad gemäß einem der Ansprüche 1 bis 6, das ferner folgendes Merkmal aufweist:
einen Sitz (8) mit einem Vorderabschnitt, der den Kraftstofftank (4) teilweise bedeckt;
wobei der Kraftstofftank (4) eine Kraftstoffzuführöffnung (4j) aufweist, die mehr auf einer Vorderseite des Kraftstofftanks (4) ist als der Sitz (8), wobei die Vorderseite nicht durch den Sitz (8) bedeckt ist.

8. Das Motorrad gemäß einem der Ansprüche 1 bis 7, das ferner folgende Merkmale aufweist:
eine Kraftstoffpumpe (25), die in dem Kraftstofftank (4) vorgesehen ist;
einen Drosselkörper (39), der an dem Einlassrohr (31) angebracht ist; und
einen Kraftstoffschlauch (27), der zwischen einer Austrittsöffnung (25b) der Kraftstoffpumpe (25) und dem Drosselkörper (39) kommuniziert,
wobei der Kraftstoffschlauch (27) einen Durchhang (27c) aufweist, der zwischen einem Kopf (3h) des Motors (3) und dem Körperrahmen (2) vorgesehen ist, und untergebracht ist, um den Kopf (3h) des Motors (3), von einer Seite des Motorrads aus gesehen, teilweise zu überlappen, während der Kraftstofftank (4) geschlossen ist, wobei es der Durchhang (27c) dem Kraftstofftank (4) ermöglicht, sich zu drehen.

9. Das Motorrad gemäß einem der Ansprüche 1 bis 7, bei dem
der Träger (50) eine Einstellvorrichtung (18a, 18b) umfasst, die angeordnet ist, um eine Position des Kraftstofftanks (4) in einer longitudinalen Richtung einzustellen.

10. Das Motorrad gemäß einem der Ansprüche 1 bis 9, das ferner folgende Merkmale aufweist:
eine Seitenabdeckung (26), die den Kraftstofftank (4) und den Luftreiniger (30) bedeckt, wobei die Seitenabdeckung folgende Merkmale aufweist:
eine Tankabdeckung (26a), die angeordnet ist, um den Kraftstofftank (4) zu bedecken, und
eine Reinigerabdeckung (26b), die angeordnet ist, um den Luftreiniger (30) zu bedecken, und
der Körperrahmen (2) einen Fixierer (20b) umfasst, der angeordnet ist, um den Kraftstofftank (4), die Tankabdeckung (26a) und die Reinigerabdeckung (26b) zu fixieren, sodass dieselben einander teilweise überlappen.

11. Das Motorrad gemäß einem der Ansprüche 1 bis 10, wobei das Motorrad ein Geländemotorrad ist.

## Revendications

1. Motocyclette, comprenant:
une ossature de carrosserie (2);
un bras arrière (14) fixé à l'ossature de carrosserie (2) pour supporter une roue arrière (15);
un amortisseur arrière (16) prévu entre l'ossature de carrosserie (2) et le bras arrière (14);
un moteur (3) fixé à l'ossature de carrosserie (2) devant l'amortisseur arrière (16) et pourvu d'un trajet d'entrée dans son côté avant;
un réservoir à carburant (4) supporté de manière rotative dans une direction verticale sur un supporteur (50) disposé sur l'ossature de carrosserie (2) en ou à l'arrière d'une position longitudinale correspondant à une position longitudinale d'un centre (P2) de l'amortisseur arrière (16) le long d'un axe de l'amortisseur arrière (16) et au-dessus du moteur (3); et
un purificateur d'air (30) disposé devant le moteur (3) et connecté au moteur (3) par l'intermédiaire d'un trajet d'entrée et recouvert au moins partiellement par le réservoir à carburant (4),
dans laquelle le moteur (3) comporte une ouverture d'entrée (3a) prévue dans une paroi avant du moteur (3) et une ouverture d'échappement (3c) prévue dans une paroi arrière du moteur (3),
la motocyclette comprenant par ailleurs:
un tuyau d'entrée (31) qui communique entre l'ouverture d'entrée (3a) et un fond du purificateur d'air (30).

2. Motocyclette selon la revendication 1, dans laquelle le supporteur (50) est disposé sur l'ossature de carrosserie (2) au-dessus du moteur (3) dans une position longitudinale correspondant à une position longitudinale d'une extrémité arrière (P1) de l'amortisseur arrière (16) ou dans une position longitudinale à l'arrière de la position longitudinale de l'extrémité arrière (P1) de l'amortisseur arrière (16).

3. Motocyclette selon l'une quelconque des revendications 1 à 2, dans laquelle
le purificateur d'air (30) comporte une ossature principale en forme de caisse (30a, 30b),
l'ossature principale en forme de caisse (30a, 30b) comporte:
une ouverture (30e) formée dans une partie recouverte par le réservoir à carburant (4), et
un couvercle (29) recouvrant l'ouverture (30e), et
le purificateur d'air (30) comporte un élément (33) entreposé dans l'ossature principale en forme de caisse (30a, 30b) et exposé à travers l'ouverture (30e) avec le couvercle (29) enlevé.

4. Motocyclette selon la revendication 3, dans laquelle
l'ossature principale en forme de caisse (30a, 30b) comporte un moyen de fixation disposé sur un bord arrière de l'ouverture (30e) pour supporter en rotation le couvercle (29).

5. Motocyclette selon l'une quelconque des revendications 1 à 4, dans laquelle
la motocyclette comprend par ailleurs:
un injecteur de carburant (40) fixé au tube d'entrée (31) visible depuis le haut avec le réservoir à carburant (4) tourné vers le haut.

6. Motocyclette selon l'une quelconque des revendications 1 à 4, dans laquelle le moteur (3) présente un axe de cylindre incliné vers l'arrière.

7. Motocyclette selon l'une quelconque des revendications 1 à 6, comprenant par ailleurs:
un siège (8) présentant une partie avant partiellement recouverte par le réservoir à carburant (4);
le réservoir à carburant (4) comportant une ouverture d'alimentation de carburant (43) plus du côté avant du réservoir à carburant (4) que le siège (8), le côté avant n'étant par recouvert par le siège (8).

8. Motocyclette selon l'une quelconque des revendications 1 à 7, comprenant par ailleurs:
une pompe à carburant (25) prévue dans le réservoir à carburant (4);
un corps de papillon (39) fixé au tube d'entrée (31); et
un flexible à carburant (27) communiquant entre une ouverture de refoulement (25b) de la pompe à carburant (25) et le corps de papillon (39),
le flexible à carburant (27) comportant un mou (27c) prévu entre une tête (3h) du moteur (3) et l'ossature de carrosserie (2) et placé de manière à recouvrir partiellement la tête (3h) du moteur (3), lorsque vu d'un côté de la motocyclette tandis que le réservoir à carburant (4) est fermé, le mou (27c) permettant au réservoir à carburant (4) de tourner.

9. Motocyclette selon l'une quelconque des revendications 1 à 7, dans laquelle
le supporteur (50) comporte un ajusteur (18a, 18b) aménagé de manière à ajuster une position du réservoir à carburant (4) dans une direction longitudinale.

10. Motocyclette selon l'une quelconque des revendications 1 à 9, comprenant par ailleurs:
un couvercle latéral (26) recouvrant le réservoir à carburant (4) et le purificateur d'air (30), où le couvercle latéral comporte:
un couvercle de réservoir (26a) disposé de manière à recouvrir le réservoir à carburant (4), et
un couvercle de purificateur (26b) disposé de manière à recouvrir le purificateur d'air (30), et
l'ossature de carrosserie (2) comporte un moyen de fixation (20b) aménage de manière à fixer le réservoir à carburant (4), le couvercle de réservoir (26a) et le couvercle de purificateur (26b), de manière à venir partiellement en recouvrement l'un avec l'autre.

11. Motocyclette selon l'une quelconque des revendications 1 à 10, dans laquelle la motocyclette est une motocyclette hors route.
